(19) **Europäisches Patentamt / European Patent Office / Office européen des brevets**

(11) **EP 3 707 013 B1**

(12) **FASCICULE DE BREVET EUROPEEN**

(45) Date de publication et mention
de la délivrance du brevet:
**18.01.2023 Bulletin 2023/03**

(21) Numéro de dépôt: **18819528.3**

(22) Date de dépôt: **07.11.2018**

(51) Classification Internationale des Brevets (IPC):
**B60C 11/04** (2006.01)   **B60C 1/00** (2006.01)
**B60C 11/12** (2006.01)   **B60C 11/03** (2006.01)
**B60C 11/00** (2006.01)

(52) Classification Coopérative des Brevets (CPC):
**B60C 1/0016; B60C 11/005; B60C 11/0323;
B60C 11/04; B60C 11/124; B60C 11/1281;**
B60C 2011/0025; B60C 2200/06

(86) Numéro de dépôt international:
**PCT/FR2018/052757**

(87) Numéro de publication internationale:
**WO 2019/092365 (16.05.2019 Gazette 2019/20)**

(54) **PNEU AYANT UNE BANDE DE ROULEMENT COMBINANT DES INCISIONS INCLINEES AVEC UN MATERIAU SPECIFIQUE**

REIFEN MIT EINER LAUFFLÄCHE, DIE GENEIGTE LAMELLEN MIT EINEM SPEZIFISCHEN MATERIAL KOMBINIERT

TYRE HAVING A TREAD COMBINING INCLINED SIPES WITH A SPECIFIC MATERIAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.11.2017 FR 1760438**

(43) Date de publication de la demande:
**16.09.2020 Bulletin 2020/38**

(73) Titulaire: **Compagnie Générale des Etablissements Michelin
63000 Clermont-Ferrand (FR)**

(72) Inventeurs:
• **ZIVKOVIC, Tony
63040 Clermont-Ferrand Cedex 9 (FR)**
• **VALLAT, Perrine
63040 Clermont-Ferrand Cedex 9 (FR)**

(74) Mandataire: **Millanvois, Patrick Jacques Jean
Manufacture Française des
Pneumatiques Michelin
CBS/CORP/J/PI - F35 - Ladoux
23, place des Carmes-Déchaux
63040 Clermont-Ferrand Cedex 9 (FR)**

(56) Documents cités:
**EP-A1- 2 196 325          WO-A1-2012/131081
US-A- 5 733 393          US-A1- 2002 166 613
US-A1- 2005 209 394**

EP 3 707 013 B1

**Description**

*DOMAINE DE L'INVENTION*

La présente invention se rapporte aux bandes de roulement pour pneus destinés à équiper des véhicules de transport et plus particulièrement des véhicules poids lourd, susceptibles d'effectuer de longs trajets à vitesse soutenue.

*ÉTAT DE LA TECHNIQUE*

De façon connue, un pneu pour véhicule poids lourd comporte une bande de roulement destinée à venir en contact avec une chaussée lors du roulage, cette bande de roulement étant prolongée par des flancs, ces derniers se terminant par des bourrelets destinés à coopérer avec une jante de montage.

Ce pneu comprend une armature de carcasse constituée par une pluralité de renforts s'étendant d'un bourrelet du pneu à l'autre, cette armature de carcasse étant elle-même surmontée d'une armature de sommet s'étendant dans la direction circonférentielle pour faire le tour complet du pneu.

L'armature de sommet est par ailleurs surmontée sur sa surface radialement extérieure par une bande de roulement réalisée avec au moins un mélange de caoutchouc dont la partie radialement la plus à l'extérieur forme une surface de roulement, cette surface de roulement étant destinée à venir en contact avec la chaussée pendant le roulage dudit pneu.

Pour obtenir une performance d'adhérence satisfaisante en roulage sur une chaussée pouvant être recouverte d'eau notamment par temps de pluie, cette bande de roulement est pourvue sur sa surface de roulement d'un dessin de sculpture formé par des rainures d'orientation appropriée. Par exemple, dans le cas d'un pneu destiné à l'équipement de l'essieu avant directeur d'un véhicule poids lourd, cette sculpture est le plus souvent composée d'une pluralité de rainures d'orientation générale circonférentielle. Ces rainures circonférentielles délimitent une pluralité de nervures circonférentielles, chacune de ces nervures ayant une face de contact radialement à l'extérieur et des parois latérales pouvant ou non être perpendiculaires à la face de contact de la nervure. L'intersection de chaque paroi latérale d'une nervure avec la face de contact génère une arête de matière. Lorsque la bande de roulement d'un pneu est pourvue de rainures à la fois transversales et circonférentielles, ces rainures délimitent des blocs ayant chacun une face de contact formant une partie de la surface de roulement.

En outre, il est connu de former, dans les nervures ou les blocs, des incisions ayant des largeurs appropriées afin que, lors du passage dans le contact avec la chaussée, les parois en vis-à-vis délimitant ces incisions puissent se fermer et venir au moins partiellement en contact l'une contre l'autre. L'intérêt de la présence de ces incisions est en premier lieu de former de nouvelles arêtes de matière sur la face de contact des nervures et des blocs, ces arêtes servant à couper un film d'eau présent sur la chaussée par temps de pluie dans le but d'assurer le contact entre la bande de roulement et ladite chaussée. D'autre part, ces mêmes incisions constituent un volume de stockage de l'eau lors du passage dans le contact, ce volume s'ajoutant au volume des rainures.

Définitions :

Plan médian équatorial : c'est un plan perpendiculaire à l'axe de rotation et passant par les points du pneu radialement les plus éloignés dudit axe.

Par direction radiale, on entend dans le présent document une direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

L'épaisseur totale d'une bande de roulement est mesurée, sur le plan équatorial du pneu pourvu de cette bande, entre la surface de roulement et la partie radialement la plus à l'extérieur de l'armature de sommet à l'état neuf.

Une bande de roulement a une épaisseur maximale de matière à user en roulage, cette épaisseur maximale de matière à user étant inférieure à l'épaisseur totale de la bande de roulement.

Les conditions usuelles de roulage du pneu ou conditions d'utilisation sont celles qui sont définies notamment par la norme E.T.R.T.O. pour des roulages européens ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

Une découpure désigne de manière générique soit une rainure soit une incision et correspond à l'espace délimité par des parois de matière se faisant face et distantes l'une de l'autre d'une distance non nulle (dite "largeur de la découpure"). Ce qui différencie une incision d'une rainure c'est précisément cette distance ; dans le cas d'une incision, cette distance est appropriée pour permettre la mise en contact au moins partielle des parois opposées délimitant ladite incision au moins lors du passage dans le contact avec la chaussée. Dans le cas d'une rainure, les parois de cette rainure ne peuvent venir en contact l'une contre l'autre dans les conditions usuelles de roulage telles que définies par exemple par l'E.T.R.T.O..

Dans l'état de la technique, il est aussi connu de pourvoir les nervures ou les blocs avec une pluralité d'incisions faisant un angle différent de 90 degrés par rapport à la surface de roulement, cet angle pouvant être soit constant soit variable dans l'épaisseur de la bande de roulement.

Par exemple, le document EP 810104 A1 montre une bande de roulement comportant une pluralité d'incisions dont l'angle moyen d'inclinaison au voisinage de la face de contact change progressivement avec l'usure de la bande de roulement.

Un autre exemple est décrit dans le document EP 1264713 B1 ; dans ce document il est proposé une sculpture pour pneus destinés à équiper l'essieu avant des véhicules poids lourd ayant au moins une nervure grâce à laquelle il est possible de réduire l'usure irrégulière tout en ayant une faible vitesse moyenne d'usure globale, l'amélioration de ces performances conférant au pneu une durée de vie sur usure améliorée.

Par usure irrégulière, on entend ici une usure qui est localisée c'est à dire une usure qui se développe sur des zones spécifiques de la surface de roulement de la bande de roulement et non de façon homogène sur l'ensemble de cette surface de roulement.

Ce document EP1264713-B1 décrit une bande de roulement pour pneu destiné à équiper l'essieu avant d'un véhicule poids lourd, ce pneu présentant un sens de roulage préférentiel et comportant une armature de carcasse radiale surmontée d'une armature de sommet, cette bande comprenant des rainures d'orientation générale circonférentielle de profondeur H délimitant des nervures, chaque nervure de largeur B ayant une face de contact destinée à être en contact avec la chaussée et deux faces latérales coupant la face de contact pour former deux arêtes, au moins une des nervures étant munie près de chacune de ses arêtes d'une pluralité d'incisions d'orientation générale transversale débouchant sur la face de contact et ayant une largeur inférieure à 1.5 mm et une profondeur au moins égale à 40% de la profondeur H des rainures, ces incisions, sensiblement parallèles entre elles, présentant dans l'épaisseur de la bande une inclinaison moyenne A non nulle par rapport à la direction perpendiculaire à la surface de roulement de la bande à l'état neuf de sorte que la force résultante exercée en roulage dans la zone de contact avec la chaussée par ladite chaussée sur la bande tende à redresser les incisions vers une inclinaison moyenne nulle par rapport à cette perpendiculaire, cette bande étant telle que, vue dans un plan de coupe perpendiculaire à l'axe de rotation du pneu, chaque incision d'une même nervure présente, avec une perpendiculaire à la face de contact de ladite nervure au point d'intersection de ladite incision avec ladite face, une inclinaison variable dans l'épaisseur de la bande, chaque incision étant inclinée par rapport à ladite perpendiculaire, en son point d'intersection avec la surface de roulement à l'état neuf, d'un angle B1, l'angle B1 étant supérieur à l'angle A, et d'un angle B2 au point de l'incision le plus à l'intérieur de la bande, l'angle B2 étant inférieur à l'angle A, le point de ladite incision le plus à l'intérieur dans la bande étant situé, par rapport à ladite perpendiculaire, de manière à être en avant du point de l'incision situé sur la face de contact de la nervure.

Vue en coupe, un point d'une incision situé à l'intérieur d'une nervure circonférentielle est dit en avant du point de l'incision avec la face de contact de la nervure à l'état neuf quand on doit faire tourner, dans le sens de roulage préconisé correspondant au sens de roulage préférentiel du pneu, un plan radial (plan contenant l'axe de rotation du pneu) passant par le point de l'incision sur la face de contact à l'état neuf pour l'amener sur le point de l'incision à l'intérieur de la bande.

Vue en coupe, l'inclinaison moyenne globale d'une incision est donnée par l'angle que fait avec la direction radiale la direction d'un segment de droite reliant le point de l'incision sur la face de contact de la nervure et le point le plus à l'intérieur de l'incision pris dans le même plan de coupe perpendiculaire à l'axe de rotation.

Outre l'absence d'usure irrégulière des pneus pour poids lourd, il est essentiel de mettre au point des pneus ayant des résistances au roulement qui soient les plus réduites afin de diminuer la consommation des véhicules en roulage.

Pour parvenir à une réduction de cette consommation, il est connu de travailler sur les matériaux du pneu et plus particulièrement sur les matériaux constituant la bande de roulement en cherchant à définir des matériaux ayant des propriétés d'hystérèse limitant le plus possible les pertes énergétiques résultant des déformations du pneu à chaque tour de roue.

Un objet de l'invention est de former un nouveau pneu d'un véhicule poids lourd, ce pneu ayant une performance améliorée en résistance au roulement et présentant par ailleurs une très bonne performance en usure irrégulière.

Par performance en résistance en roulement on entend ici la quantité d'énergie qui est dissipée par le pneu lors du roulage, cette quantité d'énergie étant liée aux cycles de déformations supportés par le pneu et ses composants. Cette énergie dissipée est liée aux caractéristiques d'hystérèse des matériaux caoutchoutiques employés dans la fabrication du pneu.

*BREF EXPOSE DE L 'INVENTION*

L'objectif que s'est fixé la Demanderesse est de réaliser un pneu pour poids lourd ayant à la fois une faible résistance au roulement et une bonne performance en usure irrégulière tout en présentant un grand nombre d'arêtes générées par la présence d'une pluralité d'incisions.

Dans ce but, il est proposé un pneu pour véhicule poids lourd, ce pneu comprenant une bande de roulement ayant une épaisseur E de matière à user et une surface de roulement destinée à venir en contact avec une chaussée.

Dans cette bande de roulement, il est formé :

- au moins un élément de relief (nervure, bloc), cet élément de relief ayant une face de contact formant une partie de la surface de roulement de la bande de roulement, des faces latérales coupant la face de contact selon des arêtes, chaque élément de relief ayant une hauteur au moins égale à l'épaisseur de matière à user,

- dans lequel cet au moins un élément de relief est pourvu d'une pluralité d'incisions réparties dans la direction circonférentielle, ces incisions étant inclinées dans l'épaisseur de la bande roulement c'est à dire faisant un angle différent de zéro degré avec un plan radial perpendiculaire à la face de contact de l'élément de relief, ces incisions inclinées s'étendant dans l'épaisseur de la bande de roulement et coupant la face de contact de l'élément de relief pour former des arêtes, ces incisions inclinées ayant des largeurs appropriées pour se fermer au moins partiellement lors du passage dans le contact avec la chaussée.

Ce pneu est caractérisé en ce que le matériau de la bande de roulement destiné à être en contact à neuf avec une chaussée et constituant la couche la plus à l'extérieur de la bande de roulement à neuf est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée majoritairement de silice avec un taux exprimé en pce, parties en poids pour cent parties d'élastomères, supérieur à 40 et un taux de charge global exprimé en pce supérieur à 50, qui présente les caractéristiques suivantes :

   (a) une surface spécifique BET entre 200 et 240 et de préférence entre 210 et 230 m2/g ;
   (b) une surface spécifique CTAB entre 180 et 220 et de préférence entre 190 et 210 m2/g ;
   (c) une taille moyenne de particules, notée dw, de 45 à 75 nm ;

   ce matériau ayant en outre les propriétés physiques suivantes :

   un rapport $\tan(\delta)\max/(G*25\%)$ au plus égal à 0.065, dans lequel $\tan(\delta)\max$ est la mesure à 60°C du facteur de perte du matériau composant la bande de roulement et $G*25\%$ le module complexe de cisaillement dynamique à 25% de déformation exprimé en MPa de ce matériau obtenu selon les préconisations de la norme ASTM D 5992-96 .

   - une déformation rupture en traction qui est au moins égale à 530%, cette valeur étant obtenue à une température de 60°C selon les préconisations de la norme française NF T 46-002.

Une incision inclinée a une largeur faible et appropriée pour se fermer dès lors que les parois qui la délimitent se rapprochent et viennent au moins partiellement en contact l'une contre l'autre lors du passage dans le contact avec la chaussée.

La trace moyenne d'une incision sur la face de contact de la nervure correspond à un segment rectiligne passant à équidistance des arêtes en vis-à-vis formées par l'intersection de l'incision avec la face de contact.

Préférentiellement, la bande de roulement selon l'invention est dépourvue de toute incision non inclinée c'est à dire d'incision faisant un angle nul avec un plan radial (plan contenant l'axe de rotation perpendiculaire à la surface de roulement et coupant la trace moyenne de l'incision).

Préférentiellement, l'allongement rupture en traction est au moins égal à 570%.

Propriétés dynamiques des matériaux composant la bande de roulement

Les propriétés dynamiques et notamment $\tan(\delta)\max$, représentative de l'hystérèse, sont mesurées sur un viscoanalyseur (Metravib VA4000), selon la norme ASTM D 5992-96. On enregistre la réponse d'un échantillon de la composition vulcanisée (éprouvettes cylindriques de 2 mm d'épaisseur et de 78 mm$^2$ de section prélevée sur pneu), soumis à une sollicitation sinusoïdale en cisaillement simple alterné, à la fréquence de 10Hz, à une température de 60°C. On effectue un balayage en amplitude de déformation de 0,1% à 100% crête-crête (cycle aller), puis de 100% à 0,1% crête-crête (cycle retour). Les résultats exploités sont le module complexe de cisaillement dynamique (G*) et le facteur de perte tan(δ). Pour le cycle aller, on indique la valeur maximale de tan(δ) observée, noté tan(δ)max ; ainsi que le module G* à 25% de déformation noté G*25%.

Essais de traction

La valeur de déformation à rupture en traction est déterminée sur une mesure de traction. Les essais de traction permettent de déterminer les courbes de contraintes/allongements et les propriétés à la rupture. Ces essais sont effectués conformément à la norme française NF T 46-002 de septembre 1988. Les mesures de traction sont effectuées à 60°C, et dans des conditions normales d'hygrométrie (50±10% d'humidité relative). Les allongements à la rupture sont exprimés en pourcentages.

Chaque incision inclinée a une inclinaison moyenne égale à l'angle que fait, par rapport à un plan radial contenant l'axe de rotation du pneu passant par la trace moyenne de l'incision sur la surface de roulement à neuf, une droite passant par la trace de l'incision sur la surface de roulement à neuf et par les points de l'incision les plus à l'intérieur de la bande de roulement.

Avantageusement, la valeur maximale de tan (δ), notée tan(δ)max et mesurée à 60 °C du matériau formant à neuf la couche externe de la bande de roulement est inférieure ou égale à 0.10.

Avantageusement, le module complexe de cisaillement dynamique G*25% du matériau formant à neuf la partie externe de la bande de roulement mesuré à 25% et 60 °C sur le cycle aller est supérieur ou égal à 2.

Description des méthodes de caractérisation de la silice :

La surface spécifique ("aire massique") BET est déterminée par adsorption de gaz à l'aide de la méthode de Brunauer-Emmett-Teller décrite dans "The Journal of the American Chemical Society" Vol. 60, page 309, février 1938), plus précisément selon la norme française NF ISO 9277 de décembre 1996 [méthode volumétrique multipoints (5 points) - gaz: azote - dégazage : lheure à 160°C - domaine de pression relative p/po : 0.05 à 0.17]

La surface spécifique CTAB est la surface externe déterminée selon la norme française NF T 45-007 de novembre 1987 (méthode B).

La taille moyenne (en masse) des particules, notée dw, est mesurée de manière classique après dispersion, par désagglomération aux ultrasons, de la charge à analyser dans l'eau.

La mesure est réalisée au moyen d'un sédimentomètre centrifuge à détection rayons X type "XDC" ("X-rays Disk Centrifuge"), commercialisé par la société Brookhaven Instruments, selon le mode opératoire qui suit.

On réalise une suspension de 3,2 g d'échantillon de silice à analyser dans 40 ml d'eau, par action durant 8 minutes, à 60% de puissance (60% de la position maxi du "output control"), d'une sonde ultrasons de 1500 W (sonificateur Vibracell 3/4 pouce commercialisé par la société Bioblock) ; après sonification, on introduit 15 ml de la suspension dans le disque en rotation ; après sédimentation pendant 120 minutes, la distribution en masse des tailles de particules est calculée par le logiciel du sédimentomètre "XDC". La moyenne géométrique en masse des tailles de particules ("géométrie mean (Xg)" selon l'appellation du logiciel), notée dw, est calculée par le logiciel à partir de l'équation suivante :

$$\log d_w = \frac{\displaystyle\sum_{i=1}^{n} m_i \log d_i}{\displaystyle\sum_{i=1}^{n} m_i}$$

avec mi masse de l'ensemble des objets dans la classe de diamètre di.

Le paramètre L/IF caractérisant la largeur de distribution de taille de pore est déterminé par porosimétrie au mercure. La mesure est réalisée à l'aide des porosimètres PASCAL 140 et PASCAL 440 commercialisés par Thermo-Finnigan, en opérant de la façon suivante : une quantité d'échantillon comprise entre 50 et 500 mg (dans le cas présent 140 mg) est introduite dans une cellule de mesure. Cette cellule de mesure est installée sur le poste de mesure de l'appareil PASCAL 140. L'échantillon est ensuite dégazé sous vide, pendant le temps nécessaire pour atteindre une pression de 0,01 kPa (typiquement de l'ordre de 10 minutes). La cellule de mesure est ensuite remplie de mercure. La première partie (pressions inférieures à 400 kPa) de la courbe d'intrusion du mercure Vp= f(P), où Vp est le volume d'intrusion du mercure et P la pression appliquée, est déterminée sur le porosimètre PASCAL 140. La cellule de mesure est ensuite installée sur le poste de mesure du porosimètre PASCAL 440, la deuxième partie de la courbe d'intrusion du mercure Vp= f(P) (pressions comprises entre 100 kPa et 400 MPa) étant déteπninée sur le porosimètre PASCAL 440. Les porosimètres sont utilisés en mode « PASCAL », de façon à ajuster en permanence la vitesse d'intrusion du mercure en fonction des variations du volume d'intrusion. Le paramètre de vitesse en mode « PASCAL » est fixé à 5. Les rayons de pore Rp sont calculés à partir des valeurs de pression P à l'aide de la relation de Washbum, rappelée ci-après, avec une hypothèse de pores cylindriques, en choisissant un angle de contact θ égal à 140° et une tension superficielle γ égale à 480 dynes/cm.

$$\text{Relation de Washbum :} \quad R_p = \frac{-2\gamma\cos\theta}{P}$$

Les volumes poreux Vp sont rapportés à la masse de silice introduite et exprimés en cm3/g. Le signal Vp= f(Rp) est lissé en combinant un filtre logarithmique (paramètre de filtre «smooth dumping factor » F = 0,96) et un filtre à moyenne mobile (paramètre de filtre «number of points to average » f = 20). La distribution de taille de pore est obtenue en calculant la dérivée dVp/dRp de la courbe d'intrusion lissée.

Par définition, l'indice de finesse IF est la valeur de rayon de pore (exprimée en angströms) correspondant au maximum de la distribution de taille de pore dVp/dRp. On note L la largeur à mi-hauteur de la distribution de taille de pore dVp/dRp. La largeur de distribution de taille de pore de l'échantillon est alors caractérisée à l'aide du paramètre L/IF.

Le nombre de silanols par nm2 est déterminé par greffage de méthanol sur la surface de la silice. Dans un premier temps, une quantité d'environ 1 g de silice brute est mise en suspension dans 10 ml de méthanol, dans un autoclave de 110 ml (Top Industrie, Réf : 09990009).

Un barreau aimanté est introduit et le réacteur, fermé hermétiquement et calorifuge, est chauffé à 200°C (40 bars) sur agitateur magnétique chauffant pendant 4 heures. L'autoclave est ensuite refroidi dans un bain d'eau froide. La silice greffée est récupérée par décantation et le méthanol résiduel évaporé sous courant d'azote. Enfin, la silice greffée est séchée à 130°C sous vide pendant 12 heures. La teneur en carbone est déterminée par analyseur élémentaire (analyseur NCS 2500 de CE Instruments) sur la silice brute et sur la silice greffée. Ce dosage de carbone sur la silice greffée doit être effectué dans les 3 jours qui suivent la fin du séchage. En effet, l'humidité de l'air ou la chaleur pourraient provoquer une hydrolyse du greffage méthanol. Le nombre de silanols par nm2 est calculé à l'aide de la formule suivante :

$$N_{SiOH/nm^2} = \frac{(\%_{C_g} - \%_{C_b}) \times 6.023 \times 10^{23}}{S_{spé} \times 10^{18} \times 12 \times 100}$$

NsioH/nm2 : nombre de silanols par nm2 (SiOH/nm2)
%cg : pourcentage massique de carbone présent sur la silice greffée
%cb : pourcentage massique de carbone présent sur la silice brute 3
Sspé. : surface spécifique BET de la silice (m2/g)

Avantageusement, la silice spécifique présente encore au moins l'une des caractéristiques suivantes, de préférence deux et encore plus préférentiellement les trois :

• une distribution de taille de particules telle que dw ≥ (16 500 / CTAB) - 30,

• une porosité vérifiant le critère L / IF > -0,0025 CTAB + 0,85,

• un taux de silanols par unité de surface, noté NSiOH/nm2, tel que NSiOH/nm2 < -0,027 CTAB + 10,5.

Avantageusement, la somme du taux de soufre et du taux d'accélérateur est supérieure ou égale à 2,5 parties en poids pour 100 parties en poids d'élastomère (pce).

Avantageusement, le taux de soufre, exprimé en pce, est supérieur ou égal à 1.4.

Préférentiellement, l'angle d'inclinaison des incisions inclinées avec un plan radial est au moins égal à 5 degrés et au plus égal à 20 degrés et encore plus préférentiellement au moins égal à 8 degrés et au plus égal à 20 degrés.

Avantageusement, l'angle des incisions varie à partir de la surface de roulement et en allant vers l'intérieur de la bande de roulement. De préférence, l'angle est compris entre 5 et 20 degrés au niveau de la surface de roulement, puis diminue en allant vers l'intérieur de la bande de roulement.

Préférentiellement, les incisions inclinées ont des largeurs au plus égales à 2 mm et encore plus préférentiellement comprises entre 0.6 mm et 1.2 mm (bornes comprises) afin de favoriser un effet de couplage mécanique par contact entre les parois en vis-à-vis délimitant chaque incision lors du passage dans le contact avec la chaussée.

Préférentiellement, chaque incision inclinée a une profondeur qui est au moins égale à 40% de l'épaisseur à user de la bande de roulement. Le matériau destiné à être en contact avec la chaussée à neuf et présentant les propriétés énoncées dans la revendication principale s'étend sur une hauteur au moins égale à la profondeur des incisions inclinées les plus profondes.

Selon une variante intéressante de l'invention, la bande de roulement comprend au moins deux couches de matériaux superposées dans la direction radiale, le matériau de la couche radialement la plus à l'extérieur à neuf ayant les propriétés physiques suivantes :

- un rapport tan($\delta$)max /(G*25%) au plus égal à 0.065, G*25% étant exprimé en MPa,

- un déformation rupture en traction au moins égal à 530% et encore plus préférentiellement au moins égal à 570%, et, radialement à l'intérieur de cette couche externe, une couche interne formée dans un matériau choisi pour être faiblement dissipatif et pour avoir les propriétés physiques suivantes :

- un rapport tan($\delta$)max /(G*25%) inférieur à 0.085, G*25% étant exprimé en MPa,

- une valeur tan($\delta$)max inférieure à 0.09.

Dans le cas de la présence dans la bande de roulement d'au moins deux couches de matériaux superposées dans la direction radiale, les incisions inclinées s'étendent dans la couche la plus à l'extérieur et au plus dans 10% de l'épaisseur de la couche la plus à l'intérieur. Préférentiellement, les incisions inclinées ne sont pas présentes dans la couche interne la plus à l'intérieur qui en soi n'est pas nécessairement destinée à être en contact avec la chaussée après usure de la bande de roulement.

Avantageusement, l'épaisseur de la couche interne la plus à l'intérieur de la bande de roulement est comprise entre 10% et 40% de l'épaisseur totale de la bande de roulement.

Avantageusement, chaque incision inclinée est pourvue d'un élargissement à son extrémité la plus à l'intérieur de la bande afin de réduire les concentrations de contraintes en fond d'incision.

De façon avantageuse, les incisions inclinées dans l'épaisseur de la bande de roulement peuvent avoir en outre des traces sur la surface de roulement à neuf qui sont inclinées selon un angle moyen différent de zéro par rapport à l'axe de rotation du pneu. Cette dernière inclinaison est donnée par l'angle entre un segment rectiligne tracé entre les extrémités de l'incision sur la surface de roulement et l'axe de rotation.

Selon une variante intéressante de l'invention, au moins certains éléments de relief forment des nervures, ces dernières étant pourvues de courtes incisions inclinées ne s'ouvrant que sur une paroi latérale de ces nervures afin de limiter l'apparition d'usure rail sur les arêtes de ces nervures.

Selon une autre variante de l'invention, la bande de roulement peut comprendre une pluralité de blocs répartis selon au moins une rangée circonférentielle, les blocs étant séparés les uns des autres par des rainures, ces rainures étant inclinées d'une manière identique aux incisions inclinées dont sont pourvus ces blocs.

Selon une variante intéressante de l'invention, les incisions inclinées ne s'ouvrent que sur une paroi latérale d'un élément de relief.

Bien entendu, chaque incision inclinée peut en outre comporter des moyens pour assurer un blocage mécanique des parois de matière en vis-à-vis délimitant cette incision. De tels moyens peuvent consister en la présence d'une géométrie zigzagante dans une direction quelconque ou en la présence de rugosités sur les parois.

D'autres caractéristiques et avantages de l'invention ressortent de la description faite ci-après en référence aux dessins annexés qui montrent, à titre d'exemples non limitatifs, des formes de réalisation de l'objet de l'invention.

*BREVE DESCRIPTION DES FIGURES*

La figure 1 représente une vue partielle de la surface de roulement d'une bande de roulement selon une variante de l'invention ;

La figure 2 représente une vue en coupe transversale de la partie sommitale du pneu selon un plan de coupe dont la trace est repérée par la ligne II-II sur la figure 1 ;

La figure 3 montre une vue en coupe de la bande montrée avec la figure 1 selon un plan de coupe dont la trace est repérée par la ligne III-III.

*DESCRIPTION DES FIGURES*

Pour faciliter la lecture des figures, des signes de référence identiques sont employés pour la description de variantes de l'invention dès lors que ces signes de référence renvoient à des éléments d'une même nature qu'elle soit structurelle ou bien fonctionnelle.

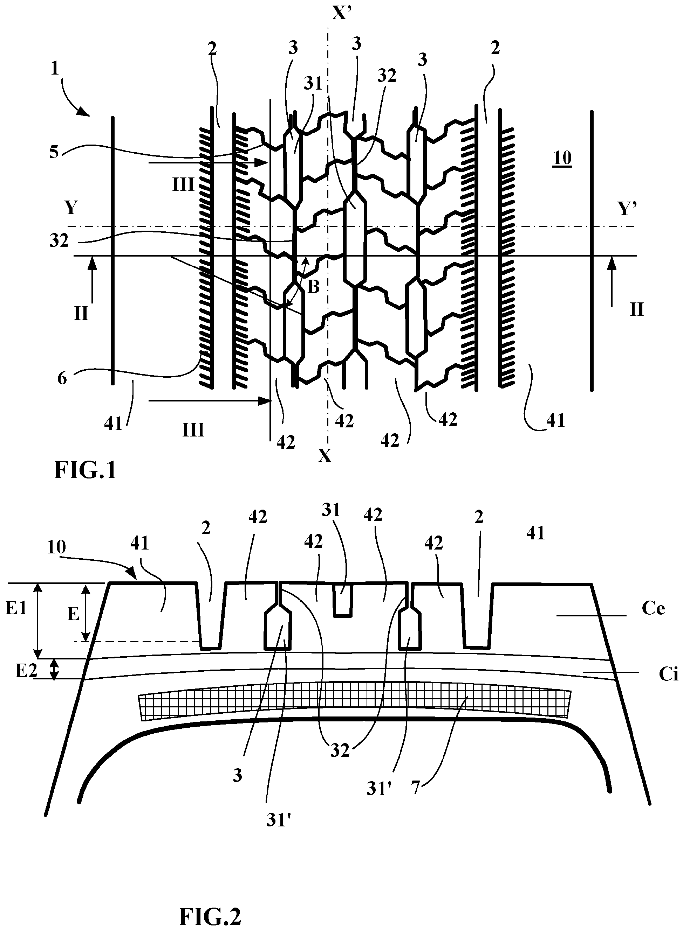

La figure 1 représente une partie de la surface de roulement 10 d'une bande de roulement 1 d'un pneu de poids lourd (315/70R22.5), ladite surface de roulement étant destinée à venir en contact avec une chaussée lors du roulage du pneu.

Dans cette variante de pneu selon l'invention, on voit que ce pneu, destiné à équiper l'essieu directeur d'un véhicule poids lourd, comprend une bande de roulement 1 ayant à neuf deux rainures principales 2 d'orientation circonférentielle (indiquée par la direction XX' sur la figure 1), ces rainures principales 2 étant en totalité ouvertes sur la surface de roulement 10 à neuf. Ces rainures principales 2 ont une profondeur à neuf qui est légèrement supérieure à l'épaisseur E de matière à user de la bande de roulement afin d'assurer une pérennité de la performance notamment par temps de pluie (dans le cas présent l'épaisseur E est égale à 10.5 mm). L'épaisseur E de matière à user est déterminée comme l'épaisseur à partir de laquelle la bande de roulement doit être renouvelée par rechapage ou le pneu doit être changé, la profondeur restante des rainures et creux ayant atteint une valeur limite fixée au préalable.

Les rainures principales 2 circonférentielles ont une profondeur maximale égale à 12 mm.

En outre, la bande de roulement 1 comprend trois rainures ondulantes 3 orientées principalement dans la direction circonférentielle. Ces rainures ondulantes 3 sont formées par une pluralité de parties ouvertes 31 sur la surface de roulement de la bande de roulement à neuf, ces parties ouvertes se prolongeant dans l'intérieur de la bande de roulement par des parties cachées 31' (visibles sur la figure 2) dans l'épaisseur de la bande de roulement.

L'ensemble des rainures délimitent deux nervures de bord 41 axialement à l'extérieur de la bande et, entre ces nervures de bord 41, quatre nervures intermédiaires 42.

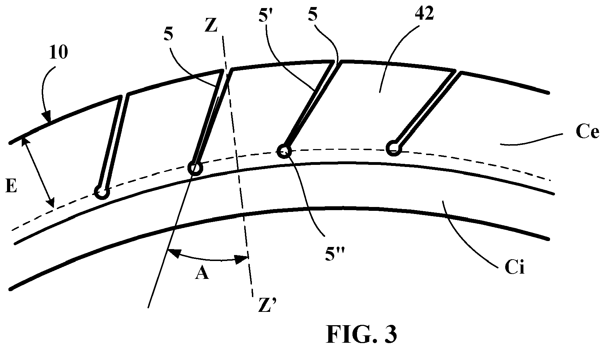

Les figures 2 et 3 montrent des coupes partielles du pneu dont une partie de la surface de roulement est montrée avec la figure 1. Sur ces figures 2 et 3 sont visibles les couches composant la bande de roulement : une couche externe Ce, positionnée radialement à l'extérieur destinée à venir en contact avec la chaussée à l'état neuf, cette couche externe Ce surmontant une couche interne Ci a priori non destinée à venir en contact avec la chaussée dès lors que l'usager ne dépasse pas la limite d'usure préalablement définie.

La figure 2 montre une coupe transversale de la partie sommitale du pneu montré avec la figure 1, cette coupe transversale étant réalisée dans un plan contenant l'axe de rotation (parallèle à la direction YY') et dont la trace sur la figure 1 est repérée par la ligne II-II

Sur cette vue en coupe, on voit la superposition d'une couche externe Ce et d'une couche interne Ci de la bande de roulement 1. La couche externe Ce a une épaisseur E1 égale à 12 mm et la couche interne Ci une épaisseur E2 égale à 3 mm. L'épaisseur E de matière à user est dans le cas présent égale à 10.5 mm.

Dans la couche externe Ce sont formées par moulage les rainures principales circonférentielles 2 et les rainures ondulantes 3 orientées circonférentiellement, ces rainures délimitant des nervures de bord 41 et des nervures intermédiaires 42. On distingue pour les rainures ondulantes 3 des parties de rainure ouvertes 31 sur la surface de roulement 10 à neuf et des parties de rainures cachées 31' sous la surface de roulement 10 à neuf. Des incisions 32' prolongent les parties de rainures ouvertes 31 sur la surface de roulement 10 jusqu'à une profondeur égale à la profondeur des rainures principales circonférentielles 2. Les parties de rainures cachées 31' sont prolongées vers la surface de roulement 10 à neuf par des incisions 32 facilitant le moulage et le démoulage du pneu. Les parties de rainure cachées 31' s'étendent dans l'épaisseur de la bande de roulement jusqu'à une profondeur égale à celle des rainures principales circonférentielles 2.

Sur cette même figure 2 on distingue de façon schématique l'armature de sommet 7 du pneu radialement sous la bande de roulement 1.

La figure 3 montre une coupe partielle d'une nervure intermédiaire 42, cette coupe étant réalisée dans un plan perpendiculaire à l'axe de rotation et dont la trace est repérée par la ligne III-III sur la figure 1.

Cette nervure intermédiaire 42 est pourvue d'une pluralité d'incisions inclinées 5 s'ouvrant sur les deux faces latérales de la nervure intermédiaire 42 et ayant sur la surface de roulement 10, comme cela est visible sur la figure 1, un tracé en zigzag. En outre, chacune de ces incisions est inclinée, dans le plan de la figure 1, selon un angle moyen B constant avec la direction axiale indiquée par la direction YY' sur la figure 1, cet angle moyen B étant, dans le cas présent, égal à 25 degrés. Cet angle moyen B est obtenu comme l'angle que fait le segment reliant le début et la fin de la trace d'une incision sur la surface de roulement et l'axe de rotation indiqué par la direction YY'. Seul le signe de cet angle moyen B change d'une nervure à l'autre dans l'exemple décrit.

Toutes les incisions 5 ont une largeur moyenne égale à 0.8 mm permettant la mise en contact même partielle des parois les délimitant.

Ces incisions 5 sont en outre, et comme on le voit sur la figure 3, inclinées dans l'épaisseur de la bande de roulement selon un angle A constant par rapport à un plan radial passant par la trace moyenne de l'incision sur la surface de roulement à neuf. Par définition, un plan radial est un plan qui contient l'axe de rotation. Sur la figure 3, la trace d'un plan radial passant par l'incision à la surface de roulement est représentée par la direction ZZ'. L'angle d'inclinaison dans la profondeur de la bande de roulement est ici de 15 degrés. La valeur de cet angle A est le même pour toutes les incisions inclinées formées sur les quatre nervures intermédiaires et est constant dans la profondeur de la bande de roulement.

Les incisions inclinées 5 comportent une partie rectiligne 5' se terminant par un élargissement 5" de largeur maximale égale à 2 mm. Ces incisions inclinées 5 s'étendent jusqu'à une profondeur égale à 11 mm qui est inférieure à l'épaisseur de la couche externe Ce mais supérieure à l'épaisseur de matière à user E dans le cas présent afin de maintenir la présence de ces incisions pendant toute la durée d'utilisation du pneu.

Sur la figure 1, on note que les nervures 41, 42 encadrant les rainures principales circonférentielles 2 sont en outre pourvues d'une pluralité de courtes incisions 6 ouvertes uniquement sur ces rainures principales 2. Ces courtes incisions 6 participent comme cela est connu à l'amélioration de la performance en usure du pneu. Ces courtes incisions 6 sont à la fois inclinées par rapport à l'axe de rotation (direction YY') et inclinées dans l'épaisseur de la bande de roulement par rapport à la direction radiale (ZZ') de la même manière que les incisions inclinées 5 formées sur les nervures intermédiaires et décrites précédemment. Il faut ici comprendre que les courtes incisions 6 sont orientées de la même manière que les incisions inclinées 5 mais pas nécessairement avec la même valeur d'angle.

Combinés à ce dessin de sculpture de bande de roulement plusieurs matériaux de bande de roulement ont été testés et comparés. Un matériau de référence, noté T dans le tableau ci-après, et un matériau spécifique, noté M sont employés comme matériau de la couche externe Ce de la bande de roulement.

Les compositions et propriétés de ces matériaux T et M sont listées dans le tableau ci-après (les valeurs des constituants sont exprimées en pce, parties en poids pour cent parties d'élastomères) :

| Composant (pce) | Matériau T | Matériau M |
|---|---|---|
| NR | 100 | 80 |
| BR | | |
| SBR Tg-48°C | | 20 |
| Noir N234 | 42 | 3 |
| Silice 165G | 10 | |
| Sil P200 | | 50 |
| Antioxydant (6PPD) | 2.5 | 2.5 |
| Acide stéarique | 2 | 2.5 |
| Oxyde de zinc | 3 | 1 |
| Silane liquide | 0.5 | 6.25 |
| Soufre | 1 | 1.5 |
| Accélérateur CBS | 1.7 | 1.8 |
| Accélérateur TBBS | | |
| Co-accélérateur DPG | | 0.62 |
| CBS + S | 2.7 | 3.3 |

**Propriétés**

| G* (25% aller) MPa | 1.7 | 2.3 |
|---|---|---|

(suite)

| | | |
|---|---|---|
| $\tan(\delta)_{max}$ | 0.15 | 0.10 |
| $\tan(\delta)_{max}$ / G*25% | 0.088 | 0.043 |
| déformation à rupture en traction (%) | 572 | 570 |

Dans le tableau ci-dessus :

- $\tan(\delta)_{max}$ est la mesure à 60°C du facteur de perte du matériau composant la bande de roulement et G*25% la mesure du module complexe de cisaillement dynamique de ce matériau obtenu selon les préconisations de la norme ASTM D 5992-96 ;

- la déformation à rupture en traction est obtenue à une température de 60°C en suivant les préconisations de la norme française NF T 46-002.

La silice utilisée pour le matériau M présente les caractéristiques reproduites dans le tableau ci-après :

| Charge | Silice Zeosil Premium 200 |
|---|---|
| Surface BET (m²/g) | 220 |
| Surface CTAB (m²/g) | 200 |
| $d_w$ (nm) | 62 |
| L/IF | 0.62 |
| $N_{SiOH/nm2}$ | 3.90 |

Le matériau constituant la couche interne Ci placée radialement sous la couche externe Ce de la bande de roulement est un matériau usuel de bande de roulement de pneu poids lourd et a les propriétés physiques suivantes :

- un rapport $\tan(\delta)max/(G*25\%)$ égal à 0.075, dans lequel $\tan(\delta)max$ est la mesure à 60°C du facteur de perte du matériau composant la bande de roulement et G*25% le module complexe de cisaillement dynamique à 25% de déformation exprimé en MPa de ce matériau obtenu selon les préconisations de la norme ASTM D 5992-96 ;

- une valeur $\tan(\delta)max$ égale à 0.085.

Dans le tableau ci-après, on compare les performances obtenues avec le matériau référence T employé en bande de roulement, cette bande de roulement étant pourvue d'incisions non inclinées avec le matériau d'essai M employé en bande de roulement, cette bande de roulement étant ou non pourvue d'incisions inclinées comme décrit précédemment.

Une valeur supérieure à 100 indique une amélioration exprimée en pourcentages.

| Performance pneu | Matériau T | Matériau M | Matériau M |
|---|---|---|---|
| | Incisions non inclinées | Incisions non inclinées | Incisions inclinées |
| Résistance roulement (base 100) | 100 | 108 | 108 |
| Usure irrégulière (base 100) | 100 | 95 | 100 |

Par incisions non inclinées on entend des incisions orientées perpendiculairement à la surface de roulement.

On constate que seule la combinaison d'un matériau M et d'incisions inclinées conduit à la fois à une amélioration du niveau de résistance au roulement et un maintien de la performance en usure irrégulière par rapport au pneu de référence employant le matériau de référence et des incisions non inclinées.

L'invention concerne également un pneu pourvu d'une bande de roulement revendiquée et encore plus particulièrement un pneu destiné à équiper l'essieu directeur d'un véhicule poids lourd. Dans un pareil cas, le pneu est pourvu d'une bande de roulement elle-même pourvue d'une sculpture formée par une pluralité de nervures circonférentielles délimitant des rainures circonférentielles.

Bien entendu, l'invention n'est pas limitée à l'exemple décrit et diverses modifications peuvent y être apportées sans sortir du cadre tel que défini par les revendications.

**Revendications**

1. Pneu pour véhicule poids lourd, ce pneu comprenant une bande de roulement (1) ayant une épaisseur E de matière à user et une surface de roulement (10) destinée à venir en contact avec une chaussée, cette bande de roulement (1) ayant au moins un élément de relief (41, 42), cet élément de relief ayant une face de contact formant une partie de la surface de roulement (10), des faces latérales coupant la face de contact selon des arêtes, chaque élément de relief ayant une hauteur au moins égale à l'épaisseur de matière à user, cet au moins un élément de relief (41, 42) étant pourvu d'une pluralité d'incisions (5) réparties dans la direction circonférentielle, ces incisions (5) étant inclinées dans l'épaisseur de la bande roulement c'est à dire faisant un angle différent de zéro degré avec un plan radial perpendiculaire à la face de contact de l'élément de relief (41, 42), ces incisions inclinées (5) s'étendant dans l'épaisseur de la bande de roulement et coupant la face de contact de l'élément de relief pour former des arêtes, ces incisions inclinées (5) ayant des largeurs appropriées pour se fermer au moins partiellement lors du passage dans le contact avec la chaussée, ce pneu étant **caractérisé en ce que** le matériau de la bande de roulement destiné à être en contact à neuf avec une chaussée et constituant la couche (Ce) la plus à l'extérieur de la bande de roulement à neuf est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée majoritairement de silice avec un taux exprimé en pce, parties en poids pour cent parties d'élastomères, supérieur à 40 et un taux de charge global exprimé en pce supérieur à 50, qui présente les caractéristiques suivantes :

   (a) une surface spécifique BET entre 200 et 240 et de préférence entre 210 et 230 m2/g ;
   (b) une surface spécifique CTAB entre 180 et 220 et de préférence entre 190 et 210 m2/g ;
   (c) une taille moyenne de particules, notée dw, de 45 à 75 nm,
   la surface spécifique BET, la surface spécifique CTAB et la taille moyenne de particules étant mesurées selon les méthodes définies dans la description,
   ce matériau ayant en outre les propriétés physiques suivantes :

   - un rapport tan($\delta$)max/(G*25%) est au plus égal à 0.065, dans lequel tan($\delta$)max est la mesure à 60°C du facteur de perte du matériau composant la bande de roulement et G*25% le module complexe de cisaillement dynamique à 25% de déformation exprimé en MPa de ce matériau obtenu selon les préconisations de la norme ASTM D 5992-96 et,
   - une déformation rupture en traction qui est au moins égale à 530%, cette valeur étant obtenue à une température de 60°C selon les préconisations de la norme française NF T 46-002.

2. Pneu selon la revendication 1 **caractérisé en ce que** la déformation de rupture en traction du matériau formant à neuf la partie radialement externe (Ce) de la bande de roulement (1) est au moins égale à 570%.

3. Pneu selon la revendication 1 ou la revendication 2 **caractérisé en ce que** la valeur maximale de tan($\delta$) du matériau formant à neuf la partie externe de la bande de roulement (1), notée tan($\delta$)max et mesurée à 60 °C, est inférieure ou égale à 0.10.

4. Pneu selon l'une des revendications 1 à 3 **caractérisé en ce que** le module complexe de cisaillement dynamique G*25% du matériau formant à neuf la partie externe de la bande de roulement (1) mesuré à 25% et 60 °C sur le cycle aller est supérieur ou égal à 2 MPa.

5. Pneu selon l'une des revendications 1 à 4 **caractérisé en ce que** la silice spécifique présente encore au moins l'une des caractéristiques suivantes, de préférence deux et encore plus préférentiellement les trois caractéristiques :

   • une distribution de taille de particules telle que dw $\geq$ (16 500 / CTAB) - 30,
   • une porosité vérifiant le critère L / IF > -0,0025 CTAB + 0,85, le paramètre L/IF caractérisant la largeur de distribution de taille de pore étant déterminé par porosimétrie au mercure suivant la méthode définie dans la description,

• un taux de silanols par unité de surface, noté NSiOH/nm2, tel que NSiOH/nm2 < -0,027

CTAB + 10,5, le taux de silanols par unité de surface étant mesuré suivant la méthode définie dans la description.

**6.** Pneu selon l'une des revendications 1 à 5 **caractérisé en ce que** la somme du taux de soufre et du taux d'accélérateur du matériau formant à neuf la partie externe de la bande de roulement est supérieure ou égale à 2,5 parties en poids pour 100 parties en poids d'élastomère (pce).

**7.** Pneu selon l'une des revendications 1 à 6 **caractérisé en ce que** le taux de soufre, exprimé en pce, est supérieur ou égal à 1.4.

**8.** Pneu selon l'une des revendications 1 à 7 **caractérisé en ce que** l'angle (A) d'inclinaison des incisions inclinées avec un plan radial est au moins égal à 5 degrés et au plus égal à 20 degrés et encore plus préférentiellement au moins égal à 8 degrés et au plus égal à 20 degrés.

**9.** Pneu selon l'une des revendications 1 à 8 **caractérisé en ce que** l'angle (A) des incisions varie à partir de la surface de roulement et en allant vers l'intérieur de la bande de roulement.

**10.** Pneu selon l'une des revendications 1 à 9 **caractérisé en ce que** les incisions inclinées ont des largeurs au plus égales à 2 mm et encore plus préférentiellement comprises entre 0.6 mm et 1.2 mm.

**11.** Pneu selon l'une des revendications 1 à 10 **caractérisé en ce que** les incisions inclinées ont une profondeur qui est au moins égale à 40% de l'épaisseur à user de la bande de roulement.

**12.** Pneu selon l'une des revendications 1 à 11 **caractérisé en ce que** la bande de roulement comprend au moins deux couches de matériaux superposées dans la direction radiale, le matériau de la couche radialement la plus à l'extérieur à neuf ayant les propriétés physiques suivantes :

- un rapport $\tan(\delta)\max/(G{*}25\%)$ au plus égal à 0.065,
- un déformation rupture en traction au moins égal à 550%, et

le matériau complétant radialement à l'intérieur la bande de roulement étant choisi pour être faiblement dissipatif et tel qu'il a les propriétés physiques suivantes :

- un rapport $\tan(\delta)\max /(G{*}25\%)$ inférieur à 0.085
- une valeur $\tan(\delta)\max$ inférieure à 0.09.

**13.** Pneu selon la revendication 12 **caractérisé en ce que** l'épaisseur de la couche interne la plus à l'intérieur de la bande de roulement est comprise entre 10% et 40% de l'épaisseur totale de la bande de roulement.

**14.** Pneu selon l'une des revendications 1 à 13 **caractérisé en ce qu'**il est destiné à équiper un essieu directeur d'un véhicule poids lourd.

**Patentansprüche**

**1.** Reifen für ein Schwerlastfahrzeug, wobei dieser Reifen einen Laufstreifen (1) mit einer abzunutzenden Materialdicke E und einer Lauffläche (10), die dazu bestimmt ist, mit einer Fahrbahn in Kontakt zu gelangen, umfasst, wobei dieser Laufstreifen (1) mindestens ein Reliefelement (41, 42) aufweist, wobei dieses Reliefelement eine Kontaktfläche aufweist, die einen Teil der Lauffläche (10) bildet, wobei Seitenflächen die Kontaktfläche entlang von Kanten schneiden, wobei jedes Reliefelement eine Höhe mindestens gleich der abzunutzenden Materialdicke aufweist, wobei dieses mindestens eine Reliefelement (41, 42) mit einer Mehrzahl von Einschnitten (5) versehen ist, die in Umfangsrichtung verteilt sind, wobei diese Einschnitte (5) in der Dicke des Laufstreifens geneigt sind, d. h. einen Winkel ungleich null Grad mit einer radialen Ebene bilden, die senkrecht zu der Kontaktfläche des Reliefelements (41, 42) verläuft, wobei diese geneigten Einschnitte (5) sich in der Dicke des Laufstreifens erstrecken und die Kontaktfläche des Reliefelements schneiden, um Kanten zu bilden, wobei diese geneigten Einschnitte (5) geeignete Breiten aufweisen, um sich beim Übergang zum Kontakt mit der Fahrbahn mindestens teilweise zu schließen, wobei dieser Reifen **dadurch gekennzeichnet ist, dass** das Material des Laufstreifens, das dazu bestimmt ist, im Neuzustand in Kontakt mit einer Fahrbahn zu sein, und im Neuzustand die äußerste Schicht (Ce) des Laufstreifens darstellt, eine Elastomermischung ist auf der Basis von natürlichem Kautschuk und synthetischem Polyisopren mit mehrheitlich cis-1,4-Verkettungen und gegebenenfalls mindestens eines weiteren Dienelastomers, wobei der natürliche Kautschuk oder das synthetische Polyisopren im Fall eines Verschnitts in einem mehrheitlichen Anteil bezogen auf den Anteil des oder der anderen verwendeten Dienelastomere vorliegt, und eines verstärkenden Füllstoffs, der mehrheitlich aus Siliciumdioxid besteht, mit einem in phr, Gewichtsteile auf hundert Teile Elastomer, ausgedrückten Anteil von mehr als 40 und einem in phr ausgedrückten Gesamtanteil an Füllstoff von mehr als 50, der die folgenden Eigenschaften aufweist:

(a) eine spezifische BET-Oberfläche zwischen 200 und 240 und bevorzugt zwischen 210 und 230 m2/g
(b) eine spezifische CTAB-Oberfläche zwischen 180 und 220 und bevorzugt zwischen 190 und 210 m2/g
(c) eine mittlere Partikelgröße, bezeichnet als dw, von 45 bis 75 nm,

wobei die spezifische BET-Oberfläche, die spezifische CTAB-Oberfläche und die mittlere Partikelgröße nach den in der Beschreibung definierten Methoden gemessen werden, wobei dieses Material ferner die folgenden physikalischen Eigenschaften aufweist:

- ein Verhältnis tan($\delta$)max/(G*25%) von höchstens 0,065, wobei tan($\delta$)max das Maß bei 60 °C des Verlustfaktors des Materials ist, aus dem der Laufstreifen besteht, und G*25 % der in MPa ausgedrückte komplexe dynamische Schermodul bei 25 % Verformung dieses Materials, der nach den Empfehlungen der Norm ASTM D 5992-96 erhalten wird, und
- eine Zugbruchverformung, die mindestens 530 % beträgt, wobei dieser Wert bei einer Temperatur von 60 °C nach den Empfehlungen der französischen Norm NF T 46-002 erhalten wird.

2. Reifen nach Anspruch 1, **dadurch gekennzeichnet, dass** die Zugbruchverformung des Materials, das im Neuzustand den radial äußeren Teil (Ce) des Laufstreifens (1) bildet, mindestens 570 % beträgt.

3. Reifen nach Anspruch 1 oder Anspruch 2, **dadurch gekennzeichnet, dass** der maximale Wert von tan($\delta$) des Materials, das im Neuzustand den äußeren Teil des Laufstreifens (1) bildet, bezeichnet als tan($\delta$)max und gemessen bei 60 °C, kleiner oder gleich 0,10 ist.

4. Reifen nach einem der Ansprüche 1 bis 3, **dadurch gekennzeichnet, dass** der komplexe dynamische Schermodul G*25 % des Materials, das im Neuzustand den radial äußeren Teil des Laufstreifens (1) bildet, gemessen bei 25 % und 60 °C über den Hinzyklus, größer oder gleich 2 MPa ist.

5. Reifen nach einem der Ansprüche 1 bis 4, **dadurch gekennzeichnet, dass** das spezifische Siliciumdioxid ferner mindestens eines der folgenden Merkmale, bevorzugt zwei und noch stärker bevorzugt die drei Merkmale aufweist:

• eine Partikelgrößenverteilung derart, dass dw > (16.500/CTAB) - 30,
• eine Porosität, die das Kriterium L/IF > -0,0025 CTAB + 0,85 erfüllt, wobei der Parameter L/IF, der die Porengrößenverteilungsbreite **kennzeichnet, durch** Quecksilber-Porosimetrie nach der in der Beschreibung definierten Methode bestimmt wird,
• einen Silanolanteil je Flächeneinheit, bezeichnet als NSiOH/nm2, derart, dass NSiOH/nm2 < -0,027 CTAB + 10,5, wobei der Silanolanteil je Flächeneinheit nach der in der Beschreibung definierten Methode gemessen wird.

6. Reifen nach einem der Ansprüche 1 bis 5, **dadurch gekennzeichnet, dass** die Summe aus dem Schwefelanteil und dem Beschleunigeranteil des Materials, das im Neuzustand den äußeren Teil des Laufstreifens bildet, größer oder gleich 2,5 Gewichtsteile auf 100 Gewichtsteile Elastomer (phr) ist.

7. Reifen nach einem der Ansprüche 1 bis 6, **dadurch gekennzeichnet, dass** der Schwefelanteil, ausgedrückt in phr, größer oder gleich 1,4 ist.

8. Reifen nach einem der Ansprüche 1 bis 7, **dadurch gekennzeichnet, dass** der Neigungswinkel (A) der geneigten Einschnitte mit einer radialen Ebene mindestens 5 Grad und höchstens 20 Grad und noch stärker bevorzugt mindestens 8 Grad und höchstens 20 Grad beträgt.

9. Reifen nach einem der Ansprüche 1 bis 8, **dadurch gekennzeichnet, dass** der Winkel (A) der Einschnitte von der Lauffläche aus und zum Inneren des Laufstreifens hin variiert.

**10.** Reifen nach einem der Ansprüche 1 bis 9, **dadurch gekennzeichnet, dass** die geneigten Einschnitte Breiten von höchsten 2 mm und noch stärker bevorzugt zwischen 0,6 mm und 1,2 mm aufweisen.

**11.** Reifen nach einem der Ansprüche 1 bis 10, **dadurch gekennzeichnet, dass** die geneigten Einschnitte eine Tiefe aufweisen, die mindestens 40 % der abzunutzenden Dicke des Laufstreifens beträgt.

**12.** Reifen nach einem der Ansprüche 1 bis 11, **dadurch gekennzeichnet, dass** der Laufstreifen mindestens zwei in radialer Richtung übereinander liegende Materialschichten umfasst, wobei das Material der im Neuzustand radial äußersten Schicht die folgenden physikalischen Eigenschaften aufweist:

- ein Verhältnis tan($\delta$)max/(G*25 %) von höchstens 0,065,
- eine Zugbruchverformung von mindestens 550 % und wobei das Material, das den Laufstreifen radial innen vervollständigt, so gewählt ist, dass es schwach dissipativ ist und dass es die folgenden physikalischen Eigenschaften aufweist:
- ein Verhältnis tan($\delta$)max/(G*25 %) unter 0,085
- einen Wert tan($\delta$)max unter 0,09.

**13.** Reifen nach Anspruch 12, **dadurch gekennzeichnet, dass** die Dicke der innersten inneren Schicht des Laufstreifens zwischen 10 % und 40 % der Gesamtdicke des Laufstreifens beträgt.

**14.** Reifen nach einem der Ansprüche 1 bis 13, **dadurch gekennzeichnet, dass** er zur Ausrüstung einer Lenkachse eines Schwerlastfahrzeugs bestimmt ist.

**Claims**

**1.** - Tyre for a heavy duty vehicle, this tyre comprising a tread (1) having a thickness E of wearable material and a tread surface (10) intended to come into contact with a roadway, this tread (1) having at least one raised element (41, 42), this raised element having a contact face forming part of the tread surface (10), lateral faces intersecting the contact face along edge corners, each raised element having a height at least equal to the thickness of wearable material, this at least one raised element (41, 42) being provided with a plurality of sipes (5) distributed in the circumferential direction, these sipes (5) being inclined, namely making an angle other than zero degrees with a radial plane perpendicular to the contact face of the raised element (41, 42), these inclined sipes (5) extending through the thickness of the tread and intersecting the contact face of the raised element to form edge corners, these inclined sipes (5) having suitable widths such that they close up at least partially when they enter the contact patch in contact with the roadway, this tyre being **characterized in that** the material of the tread that is intended to be in contact when new with a roadway and making the outermost layer (Ce) of the tread when new is an elastomer compound based on natural rubber or synthetic polyisoprene with a majority of cis-1,4 linkages and optionally on at least one other diene elastomer, the natural rubber or the synthetic polyisoprene in case of a blend being present in a majority amount relative to the amount of the other diene elastomer(s) used and on a reinforcing filler consisting predominantly of silica, with a content expressed in phr (parts by weight per hundred parts of elastomers) of greater than 40 and an overall filler content expressed in phr of greater than 50, which has the following characteristics:

(a) a BET specific surface area of between 200 and 240 and preferably between 210 and 230 m2/g;
(b) a CTAB specific surface area of between 180 and 220 and preferably between 190 and 210 m2/g;
(c) an average particle size (by mass), denoted dw, of from 45 to 75 nm

- this material further having the following physical properties:

- a tan($\delta$)max(G*25%) ratio is at most equal to 0.065, in which tan($\delta$)max is the measurement, at 60°C, of the loss factor of the material of which the tread is made, and G*25% is the complex dynamic shear modulus, expressed in MPa, of this material as obtained according to the recommendations of standard ASTM D 5292-96, and
- a deformation at break under traction testing that is at least equal to 530%, this value being obtained at a temperature of 60°C according to the recommendations of French standard NF T 46-002.

**2.** - Tyre according to Claim 1, **characterized in that** the deformation at break under tensile testing of the material which when new forms the radially external part (Ce) of the tread (1) is at least equal to 570%.

**3.** - Tyre according to Claim 1 or Claim 2, **characterized in that** the maximum value of tan($\delta$), denoted tan($\delta$)max and measured at 60°C for the material which, when new, forms the external part of the tread (1), is less than or equal to 0.10.

**4.** - Tyre according to one of Claims 1 to 3, **characterized in that** the complex dynamic shear modulus G*25% of the material which, when new, forms the external part of the tread (1), measured at 25% and 60 °C on the outbound cycle, is greater than or equal to 2 MPa.

**5.** - Tyre according to one of Claims 1 to 4, **characterized in that** the specific silica also has at least one of the following characteristics, preferably two and more preferably still, all three:

- a particle size distribution such that dw $\geq$ (16 500 / CTAB) - 30,
- a porosity that satisfies the criterion L / IF > -0.0025 CTAB + 0.85,
- a content of silanols per unit area, denoted NSiOH/nm2, such that NSiOH/nm2 < -0.027 CTAB + 10.5.

**6.** - Tyre according to one of Claims 1 to 5, **characterized in that** the sum of the sulfur content and accelerator content of the material which when new forms the external part of the tread is greater than or equal to 2.5 parts by weight per 100 parts by weight of elastomer (phr).7

**7.** - Tyre according to one of Claims 1 to 6, **characterized in that** the sulfur content, expressed in phr, is greater than or equal to 1.4.

**8.** - Tyre according to one of Claims 1 to7, **characterized in that** the angle (A) of inclination of the inclined sipes with respect to a radial plane is at least equal to 5 degrees and at most equal to 20 degrees and more preferably still, at least equal to 8 degrees and at most equal to 20 degrees.

**9.** - Tyre according to one of Claims 1 to 8, **characterized in that** the angle (A) of the sipes varies from the tread surface progressing towards the inside of the tread.

**10.** - Tyre according to one of Claims 1 to 9, **characterized in that** the inclined sipes have widths at most equal to 2 mm, and more preferably still, comprised between 0.6 mm and 1.2 mm.

**11.** - Tyre according to one of Claims 1 to 10, **characterized in that** the inclined sipes have a depth which is at least equal to 40% of the wearable thickness of the tread.

**12.** - Tyre according to one of Claims 1 to 11, **characterized in that** the tread comprises at least two layers of materials that are superposed in the radial direction, the material of the layer which when new is radially outermost having the following physical properties:

- a tan($\delta$)max /(G*25%) ratio at most equal to 0.065,
- a deformation at break in traction at least equal to 550%, and

the material that completes the tread radially on the inside being chosen to be a weak dissipator and such that it has the following physical properties:

- a tan($\delta$)max /(G*25%) ratio of less than 0.085,
- a tan($\delta$)max value of less than 0.09.

**13.** - Tyre according to Claim 12, **characterized in that** the thickness of the innermost internal layer of the tread is comprised between 10% and 40% of the total thickness of the tread.

**14.** - Tyre according to one of Claims 1 to 13, **characterized in that** it is intended to equip a steering axle of a heavy-duty vehicle.

FIG.1

FIG.2

**FIG. 3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 810104 A1

- EP 1264713 B1

**Littérature non-brevet citée dans la description**

- *The Journal of the American Chemical Society,* Février 1938, vol. 60, 309